# EUROPÄISCHE PATENTSCHRIFT

(11) **EP 4 688 522 B1**
(45) Veröffentlichungstag und Bekanntmachung des Hinweises auf die Patenterteilung: **02.12.2026**
(21) Anmeldenummer: 24707509.6
(22) Anmeldetag: 23.02.2024
(51) Int. Cl.: B60W 30/18, B60W 30/08, B60W 30/12, B60W 30/14, B60W 40/04, G08G 1/16

(54) **VERFAHREN ZUR DURCHFÜHRUNG EINES AUTOMATISIERTEN ÜBERHOLMANÖVERS EINES FAHRZEUGES**
METHOD FOR CARRYING OUT AN AUTOMATED OVERTAKING MANEUVER OF A VEHICLE
PROCÉDÉ D'EXÉCUTION DE MANOEUVRE AUTOMATISÉE DE DÉPASSEMENT DE VÉHICULE

(30) Priorität: 03.04.2023 DE 102023001323
(43) Veröffentlichungstag der Anmeldung: 11.02.2026
(73) Patentinhaber: Mercedes-Benz Group AG, 70372 Stuttgart (DE)
(72) Erfinder: KÄFER, Eugen, 71272 Renningen (DE)
(74) Vertreter: Novagraaf Group
(86) Internationale Anmeldenummer: PCT/EP2024/054695
(87) Internationale Veröffentlichungsnummer: WO 2024/208483

(56) Entgegenhaltungen:
- EP-A1- 3 196 861
- DE-A1- 102017 005 166
- DE-A1- 102019 205 020
- US-A1- 2018 370 527
- US-A1- 2021 362 713

## Beschreibung

Die Erfindung betrifft ein Verfahren zur Durchführung eines automatisierten Überholmanövers eines Fahrzeuges, wobei in einer Umgebung des Fahrzeuges fahrende weitere Fahrzeuge erfasst werden.

Aus der DE 43 13 568 C1 ist ein Verfahren zur Leithilfe für einen Fahrspurwechsel von einer Momentanspur auf eine benachbarte Zielspur durch ein Kraftfahrzeug bekannt. Dabei werden ein Vorraum und ein Rückraum der benachbarten Zielspur für den gewünschten Spurwechsel überwacht, die Abstände von dort detektierten Objekten und deren Geschwindigkeiten gemessen sowie daraus Sicherheitsabstände berechnet. Wenn alle gemessenen Abstände größer als die errechneten Sicherheitsabstände sind, wird dies als Spurwechsel erkannt.

Darüber hinaus offenbart die DE 10 2020 118 664 A1 ein Verfahren zum Unterstützen eines automatisiert fahrenden Fahrzeuges. Dabei wird ermittelt, ob zu einem Passieren eines vor dem automatisiert fahrenden Fahrzeug auf einer Fahrbahn befindlichen Hindernisses ein automatischer Spurwechsel des automatisiert fahrenden Fahrzeuges auf eine Überholfahrspur möglich ist. Ist dies nicht der Fall, stoppt das automatisiert fahrende Fahrzeug vor Erreichen des Hindernisses und sendet eine Unterstützungsanfrage an eine fahrzeugexterne Zentrale. Mittels der fahrzeugexternen Zentrale wird ein weiteres Fahrzeug in einer Umgebung des automatisiert fahrenden Fahrzeuges ermittelt und instruiert, sich in Richtung des automatisiert fahrenden Fahrzeuges zu bewegen und vor Erreichen desselben auf die Überholfahrspur zu wechseln.

Aus der WO 2022/189 716 A1 ist ein Verfahren zur Unterstützung eines Fahrers eines Fahrzeugs bei einem manuellen Spurwechselmanöver von einer aktuellen Fahrspur zu einer Überholspur bekannt. Dabei ist vorgesehen, dass bei Erkennung einer Blinkerbetätigung, durch die der Fahrer die Einleitung des Spurwechselmanövers anzeigt, ein Kollisionsrisiko bewertet wird und ggf. eine Warnung an den Fahrer ausgegeben wird. Die Bewertung des Kollisionsrisikos basiert dabei auf der Ermittlung von Relativbeschleunigungen des Fahrzeugs bezüglich anderer Fahrzeuge, die dem Fahrzeug auf der aktuellen Fahrspur oder Überholspur vorausfahren oder dem Fahrzeug auf diesen Spuren folgen.

Aus der DE 10 2017 203 867 A1 ist ein Fahrerunterstützungsverfahren für ein Fahrzeug bekannt, bei dem ist vorgesehen ist, dass mittels einer Kamera ein dem Fahrzeug nachfolgendes weiteres Fahrzeug erkannt wird und dass durch Auswertung von Kamerabildern auf eine Überholabsicht des nachfolgenden Fahrzeugs geschlossen wird und die Überholabsicht dem Fahrer signalisiert wird.

Die Druckschrift EP 3 196 861 A1 offenbart ein Verfahren zur Unterstützung eines Fahrspurwechsels. Dabei wird ein sich von hinten näherndes Fahrzeug erfasst und geprüft, ob ein Spurwechsel auf eine andere Fahrspur möglich und zulässig ist. Ist dies der Fall, wird der Fahrer informiert, um einen manuellen oder automatischen Fahrspurwechsel auszulösen. Zudem wird offenbart, das Fahrzeug vor oder während des Fahrspurwechsels zu beschleunigen, falls die berechnete Relativgeschwindigkeit des sich von hinten nähernden Fahrzeugs einen vorbestimmten Schwellenwert überschreitet, um eine Kollision zu verhindern.

Aus der Druckschrift DE 10 2019 205 020 A1 ist ein Verfahren zum Betrieb eines Kraftfahrzeugs mit einem Abstandsregeltempomaten bekannt. Das Verfahren erfasst einen Verkehrsteilnehmer auf einer Nachbarfahrspur sowie ein vor diesem befindliches Verkehrshindernis. Eine Gefahrensituation wird bestimmt, indem ein erster Zeitpunkt (t1), zu dem das eigene Fahrzeug das Hindernis überholt, mit einem zweiten Zeitpunkt (t2) verglichen wird, zu dem der benachbarte Verkehrsteilnehmer auf das Hindernis auffährt. Liegt eine solche Gefahrensituation vor (t1 ≈ t2), wird das eigene Fahrzeug beschleunigt.

Die Druckschrift US 2021/0362713 A1 Fahrzeuggeschwindigkeits-Steuervorrichtung. Diese Vorrichtung umfasst eine vorderseitige Erfassungseinheit, um die Zeit zum Überholen eines seitlich fahrenden Ziel-Fahrzeugs zu ermitteln, und eine rückseitige Erfassungseinheit, um die Zeit zu ermitteln, bis ein nachfolgendes Fahrzeug einen vorbestimmten rückwärtigen Abstand zum eigenen Fahrzeug erreicht. Das eigene Fahrzeug wird beschleunigt, wenn die Zeit bis zum Überholen größer ist als die Zeit, bis der vorbestimmte rückwärtige Abstand erreicht ist, um eine Verlangsamung des nachfolgenden Fahrzeugs zu verhindern.

Der Erfindung liegt die Aufgabe zugrunde, ein neuartiges Verfahren zur Durchführung eines Überholmanövers für ein automatisiert fahrendes Fahrzeug anzugeben.

Die Aufgabe wird erfindungsgemäß gelöst durch ein Verfahren, welches die in Anspruch 1 angegebenen Merkmale aufweist.

Vorteilhafte Ausgestaltungen der Erfindung sind Gegenstand der Unteransprüche.

Ein Verfahren zur Durchführung eines automatisierten Überholmanövers eines Fahrzeuges, wobei in einer Umgebung des Fahrzeuges fahrende weitere Fahrzeuge erfasst werden, sieht erfindungsgemäß vor, dass
- bei einem von dem Fahrzeug geplanten Überholmanöver anhand erfasster Signale einer Umgebungssensorik überprüft wird, ob sich innerhalb einer rückwärtigen Sensorreichweite der Umgebungssensorik auf einer Fahrspur des Fahrzeuges und auf einer Überholspur nachfolgende weitere Fahrzeuge befinden,
- wenn anhand der erfassten Signale ermittelt wird, dass sich in Bezug auf die Sensorreichweite nur auf der Fahrspur des Fahrzeuges ein nachfolgendes weiteres Fahrzeug befindet, eine momentane Fahrgeschwindigkeit des Fahrzeuges um einen vorgegebenen Geschwindigkeitswert verringert wird, um das nachfolgende weitere Fahrzeug zum Überholen des Fahrzeuges und eines dem Fahrzeug vorausfahrenden Fahrzeuges zu veranlassen und
- nachdem das nachfolgende weitere Fahrzeug zumindest das Fahrzeug überholt hat, anhand erfasster Signale der Umgebungssensorik des Fahrzeuges überprüft wird, ob ein zur Durchführung des Überholmanövers erforderlicher Freiraum auf der Überholspur vorhanden ist.

Durch Anwendung des Verfahrens wird das nachfolgende weitere Fahrzeug veranlasst, auf die Überholspur zu wechseln und das Fahrzeug sowie ein diesem vorausfahrenden Fahrzeug zu überholen. Dadurch kann das Fahrzeug sein geplantes Überholmanöver durchführen, ohne dass das Risiko besteht, dass das nachfolgende Fahrzeug plötzlich auf die Überholspur ausschert und das Fahrzeug zu diesem Zeitpunkt ebenfalls ansetzt, das geplante Überholmanöver durchzuführen.

Da das Fahrzeug seine momentane Fahrgeschwindigkeit um den vorgegebenen Geschwindigkeitswert, insbesondere geringfügig, verringert, wird das nachfolgende weitere Fahrzeug dazu aufgefordert, einen Überholvorgang auszuführen, um das Fahrzeug und das vorausfahrende Fahrzeug zu überholen. Das heißt, dass das nachfolgende weitere Fahrzeug sich nicht mehr hinter dem Fahrzeug befindet, so dass eine neue Situation vorliegt, welche in Bezug auf das geplante Überholmanöver überprüft werden muss.

Eine weitere Ausführung des Verfahrens sieht vor, dass wenn auf der Überholspur ein nachfolgendes weiteres Fahrzeug innerhalb der Sensorreichweite erfasst wird, das Überholmanöver des Fahrzeuges nicht eingeleitet wird, wenn ein Abstand zwischen dem auf der Überholspur fahrenden nachfolgenden weiteren Fahrzeug und dem Fahrzeug geringer ist als ein für einen zumutbaren Bremsvorgang des nachfolgenden weiteren Fahrzeuges erforderlicher Mindestfreiraum. Mit anderen Worten: Wenn die Sensorreichweite zu gering ist, um den erforderlichen Mindestfreiraum zu erkennen, wird das Überholmanöver des Fahrzeuges nicht zugelassen.

Insbesondere wird das Überholmanöver des Fahrzeuges in einem solchen Fall nicht eingeleitet, da das Fahrzeug, wenn dieses das vorausfahrende Fahrzeug überholt, eine potentielle Gefahr für das auf der Überholspur fahrende, nachfolgende weitere Fahrzeug darstellt. Insbesondere stellt das Fahrzeug eine potentielle Gefahr für das nachfolgende weitere Fahrzeug auf der Überholspur dar, wenn die Fahrzeuge auf einer Autobahn ohne Geschwindigkeitsbegrenzung fahren und es sich bei dem auf der Überholspur fahrenden nachfolgenden weiteren Fahrzeug um einen so genannten Schnellfahrer handelt, welcher mit einer momentanen Fahrgeschwindigkeit von mindestens 200 km/h fährt. Ein derart schnell fahrendes nachfolgendes weiteres Fahrzeug erfordert zu seiner Erfassung mittels der Umgebungssensorik des Fahrzeuges eine vergleichsweise hohe Sensorreichweite, beispielsweise bis zu 260 m, wobei eine Umgebungssensorik mit solch hoher Sensorreichweite vergleichsweise kostenintensiv ist.

Der erforderliche Mindestfreiraum des auf der Überholspur fahrenden weiteren Fahrzeuges wird in einer Weiterbildung aus einem Reaktionsweg, einem Bremsweg und einem Sicherheitsabstand nach einem durchgeführten Bremsvorgang des nachfolgenden weiteren Fahrzeuges zu dem Fahrzeug auf der Überholspur ermittelt. Wird dabei von einem ungünstigen Fall ausgegangen, wobei angenommen wird, dass das nachfolgende weitere Fahrzeug mit einer möglichen Fahrgeschwindigkeit von über 200 km/h angefahren kommt, so muss der erforderliche Mindestfreiraum, welcher dem Fahrzeug für einen zumutbaren Bremsvorgang zur Verfügung stehen sollte, entsprechend groß sein.

In einer Ausführung wird, wenn das auf der Überholspur fahrende, nachfolgende weitere Fahrzeug für eine vorgegebene Zeitdauer innerhalb der rückwärtigen Sensorreichweite des Fahrzeuges erfasst wird, und auf der Überholspur erfasst wird, dass zwischen dem Fahrzeug und dem Fahrzeug, welches das Fahrzeug bereits überholt hat, ein weiterer vorgegebener Sicherheitsabstand vorhanden ist sowie ein erforderlicher weiterer Mindestfreiraum für das nachfolgende weitere Fahrzeug auf der Überholspur vorhanden ist, das Fahrzeug sein geplantes Überholmanöver einleiten.

Eine mögliche Weiterbildung des Verfahrens sieht vor, dass wenn das auf der Überholspur fahrende, nachfolgende weitere Fahrzeug für die vorgegebene Zeitdauer innerhalb der rückwärtigen Sensorreichweite des Fahrzeuges erfasst wird, der erforderliche Mindestfreiraum für das Fahrzeug aus einem Bremsweg und einem Sicherheitsabstand ermittelt wird. Das heißt, dass der Reaktionsweg des nachfolgenden weiteren Fahrzeuges nicht mehr berücksichtigt werden muss, da das nachfolgende weitere Fahrzeug dem überholenden nachfolgenden weiteren Fahrzeug bereits zumindest für die vorgegebene Zeitdauer gefolgt ist und ein Fahrer des nachfolgenden weiteren Fahrzeuges zumindest die vorgegebene Zeitdauer zur Verfügung hatte, um durch einen Bremsvorgang auf das überholende nachfolgende weitere Fahrzeug zu reagieren. Der erforderliche weitere Mindestfreiraum ist dann um den Reaktionsweg verringert und entsprechend geringer.

Ausführungsbeispiele der Erfindung werden im Folgenden anhand von Zeichnungen näher erläutert.

Dabei zeigen:
- Fig. 1: schematisch eine Abbildung mit einem Fahrbahnabschnitt und einer Verkehrssituation zu einem Zeitpunkt und eine weitere Abbildung mit einer Verkehrssituation auf dem Fahrbahnabschnitt zu einem späteren Zeitpunkt und
- Fig. 2: schematisch eine Abbildung mit einem Fahrbahnabschnitt und einer ersten Verkehrssituation und eine weitere Abbildung mit dem Fahrbahnabschnitt und einer zweiten Verkehrssituation.

Einander entsprechende Teile sind in allen Figuren mit den gleichen Bezugszeichen versehen.

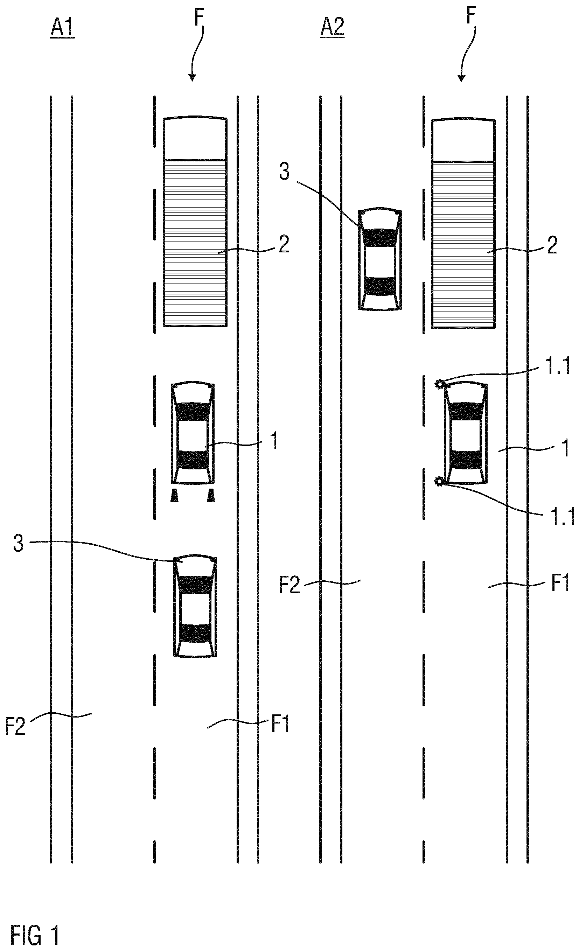

Figur 1 zeigt zwei Abbildungen A1, A2 mit jeweils einem Fahrbahnabschnitt F, welcher eine rechte Fahrspur F1 und eine Überholspur F2 umfasst.

Auf der Fahrspur F1 fährt ein Fahrzeug 1, ein diesem vorausfahrendes Fahrzeug 2 und ein dem Fahrzeug 1 nachfolgendes weiteres Fahrzeug 3.

Das Fahrzeug 1 fährt im automatisierten Fahrbetrieb, insbesondere mit einem Automatisierungsgrad Level 3 oder höher.

Level 3 beschreibt einen Automatisierungsgrad, bei welchem eine Fahraufgabe vollumfänglich durch das Fahrzeug 1 ausgeführt wird, so dass sich ein Fahrer des Fahrzeuges 1 anderen Tätigkeiten zuwenden kann. Bei Bedarf wird eine Übernahmeaufforderung in dem Fahrzeug 1 ausgegeben, mittels welcher der Fahrer aufgefordert wird, die Fahraufgabe zu übernehmen.

Bei einem Automatisierungsgrad Level 4 wird das Fahrzeug 1 hochautomatisiert betrieben, wobei die Fahraufgabe des Fahrzeuges 1 dauerhaft von diesem ausgeführt wird. Kann eine Fahrsituation nicht von dem Fahrzeug 1 bewältigt werden, wird der Fahrer aufgefordert, die Fahraufgabe zu übernehmen.

Im Folgenden wird ein Verfahren zur Durchführung eines automatisierten Überholmanövers des Fahrzeuges 1 beschrieben.

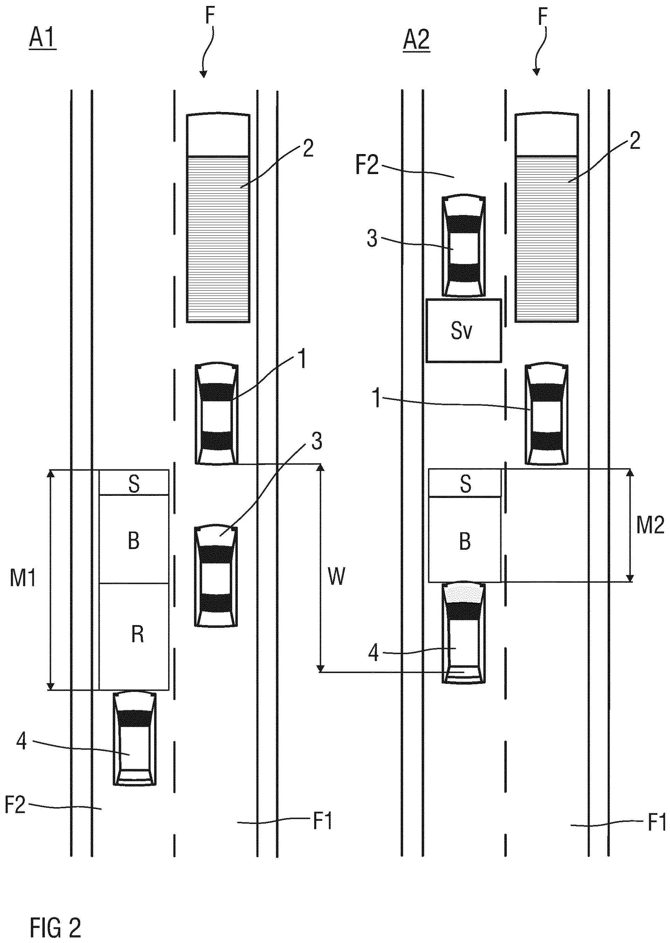

Das Fahrzeug 1 umfasst eine Umgebungssensorik mit einer Anzahl von im und/oder am Fahrzeug 1 angeordneten, nicht näher dargestellten Erfassungseinheiten, welche im Fahrbetrieb des Fahrzeuges 1 fortlaufend Signale erfassen. Anhand der erfassten Signale werden innerhalb einer in Figur 2 gezeigten Sensorreichweite W der Umgebungssensorik eine Umgebung des Fahrzeuges 1 und sich in dieser befindende Objekte detektiert.

Gemäß Abbildung A1 in Figur 1 plant das Fahrzeug 1 ein Überholmanöver, um das vorausfahrende Fahrzeug 2, einen Lastkraftwagen, zu überholen. Zur Durchführung des Überholmanövers wird anhand der erfassten Signale der Umgebungssensorik des Fahrzeuges 1 ermittelt, ob sich auf der Fahrspur F1 des Fahrzeuges 1, hinter diesem, ein nachfolgendes weiteres Fahrzeug 3 befindet und ob auf der Überholspur F2 ein in Figur 2 gezeigtes nachfolgendes weiteres Fahrzeug 4 fährt.

Wenn innerhalb der Sensorreichweite W der Umgebungssensorik des Fahrzeuges 1, insbesondere in dessen rückwärtigem Raum kein nachfolgendes weiteres Fahrzeug 4 auf der Überholspur F2 detektiert wird und ermittelt wird, dass auf der Fahrspur F1 hinter dem Fahrzeug 1 ein nachfolgendes weiteres Fahrzeug 3 fährt, verringert das Fahrzeug 1 seine momentane Fahrgeschwindigkeit geringfügig um einen vorgegebenen Geschwindigkeitswert. Dadurch wird das nachfolgende weitere Fahrzeug 3 aufgefordert, auf die Überholspur F2 zu wechseln und das Fahrzeug 1 sowie das vorausfahrende Fahrzeug 2, wie in der zweiten Abbildung A2 in Figur 1 gezeigt ist, zu überholen.

Nachdem das nachfolgende weitere Fahrzeug 3 das Fahrzeug 1 überholt hat, überprüft dieses erneut innerhalb der Sensorreichweite W seinen rückwärtigen Raum auf seiner Fahrspur F1 und der Überholspur F2, ob für sein geplantes Überholmanöver ausreichend Freiraum auf der Überholspur F2 vorhanden ist. Wird anhand der erfassten Signale der Umgebungssensorik ermittelt, dass ein ausreichender Freiraum vorhanden ist, aktiviert das Fahrzeug 1 seine Fahrtrichtungsanzeiger 1.1 und setzt zum Überholen des vorausfahrenden Fahrzeuges 2 an. Insbesondere wird das Überholmanöver automatisiert durchgeführt.

In einer Abbildung A1 in Figur 2 ist eine erste Verkehrssituation auf einem Fahrbahnabschnitt F mit einer rechten Fahrspur F1 und einer Überholspur F2 gezeigt.

Auch hier fährt das Fahrzeug 1 im automatisierten Fahrbetrieb mit einem Automatisierungsgrad Level 3 oder höher.

Auf der Fahrspur F1 fährt das Fahrzeug 1, ein diesem vorausfahrendes Fahrzeug 2 und ein dem Fahrzeug 1 nachfolgendes weiteres Fahrzeug 3. Auf der Überholspur F2 fährt ein nachfolgendes weiteres Fahrzeug 4, welches sich außerhalb der Sensorreichweite W der Umgebungssensorik des Fahrzeuges 1 befindet und somit von dieser nicht erfasst wird.

Das Fahrzeug 1 plant ein Überholmanöver, um das vorausfahrende Fahrzeug 2, insbesondere einen Lastkraftwagen, zu überholen.

Zur Durchführung des Überholmanövers des Fahrzeuges 1 ist es erforderlich, sämtliche nachfolgenden weiteren Fahrzeuge 4 auf der Überholspur F2 zu detektieren, welche durch das Überholmanöver des Fahrzeuges 1 gefährdet werden können.

Insbesondere stellt das das Überholmanöver durchführende Fahrzeug 1 eine Gefährdung für nachfolgende weitere Fahrzeuge 4 auf der Überholspur F2 dar, wenn das auf der Überholspur F2 fahrende weitere Fahrzeug 4 eine Kollision mit dem Fahrzeug 1 durch einen zumutbaren Bremsvorgang nicht mehr sicher vermeiden kann.

Dies ist insbesondere dann der Fall, wenn ein Abstand des nachfolgenden weiteren Fahrzeuges 4 auf der Überholspur F2 zu dem Fahrzeug 1 geringer ist als ein erforderlicher Mindestfreiraum M1, um das nachfolgende weitere Fahrzeug 4 zumutbar abzubremsen.

Insbesondere ist es erforderlich, den erforderlichen Mindestabstand M1 bei einer Systemauslegung zum automatisierten Fahrbetrieb des Fahrzeuges 1 zu definieren. Hierbei muss davon ausgegangen werden, dass das nachfolgende weitere Fahrzeug 4 im ungünstigsten Fall mit einer für die Systemauslegung vorgegebenen denkbaren Höchstgeschwindigkeit, beispielsweise 250 km/h auf einem Autobahnabschnitt ohne Geschwindigkeitsbegrenzung, fährt und höchstens mit einer vorgegebenen zumutbaren Verzögerung, von zum Beispiel 6 m/s², bremsen wird.

Der erforderliche Mindestfreiraum M1 setzt sich dabei aus einem Reaktionsweg R, einem Bremsweg B und einem Sicherheitsabstand S zusammen.

Der Reaktionsweg R wird durch eine Wegstrecke vorgegeben, welche das nachfolgende weitere Fahrzeug 4 innerhalb einer vorgegebenen Reaktionszeit von beispielsweise 1 s zurücklegt. Bei einer denkbaren Höchstgeschwindigkeit von beispielsweise 250 km/h und einer Reaktionszeit von 1 s ergibt sich beispielhaft ein Reaktionsweg von 70 m.

Der Bremsweg B beschreibt eine Wegstrecke, welche benötigt wird, um das auf der Überholspur F2 fahrende, nachfolgende weitere Fahrzeug 4 auf die momentane Fahrgeschwindigkeit des Fahrzeuges 1 zu verzögern.

Der Sicherheitsabstand S ist dabei ein Abstand, welcher nach dem Bremsvorgang des nachfolgenden weiteren Fahrzeuges 4 auf der Überholspur F2 zwischen diesem und dem Fahrzeug 1 als sogenannte Sicherheitsreserve verbleiben soll.

Um das geplante Überholmanöver des Fahrzeuges 1 gemäß der in der Abbildung A1 gezeigten ersten Verkehrssituation zuzulassen, ist, dass es möglich ist, zu erkennen, also zu ermitteln, ob der erforderliche Mindestfreiraum M1 vorhanden ist. Mit anderen Worten heißt das, dass wenn die Sensorreichweite W der Umgebungssensorik zu gering ist, um den erforderlichen Mindestfreiraum M1 zu erkennen, dann kann das geplante Überholmanöver des Fahrzeuges 1 nicht zugelassen werden.

Gemäß der in Figur 2 in Abbildung A1 gezeigten ersten Verkehrssituation ist dies der Fall, und das Fahrzeug ist aufgrund seiner Systemauslegung nicht dazu ausgebildet, in diesem Fall sein geplantes Überholmanöver auszuführen.

Gemäß der in Figur 2 in der weiteren Abbildung A2 gezeigten zweiten Verkehrssituation hat das nachfolgende weitere Fahrzeug 3 das Fahrzeug 1 überholt und fährt auf Höhe des dem Fahrzeug 1 auf der Fahrspur F1 vorausfahrenden Fahrzeuges 2.

Das auf der Überholspur F2 fahrende nachfolgende weitere Fahrzeug 4 ist dem überholenden nachfolgenden weiteren Fahrzeug 3 für eine vorgegebene Zeitdauer, insbesondere von mehreren Sekunden, lang gefolgt und hat somit frühzeitig auf das nachfolgende weitere Fahrzeug 3 reagieren können, insbesondere durch Verringerung seiner Fahrgeschwindigkeit.

Nach vorn steht dem Fahrzeug 1 zum Durchführen seines geplanten Überholmanövers ausreichend Freiraum zur Verfügung, das heißt, dass ein Sicherheitsabstand Sv vorhanden ist.

Nach hinten ist ein ausreichend großer Freiraum vorhanden, welcher sich als weiterer Mindestfreiraum M2 aus dem Bremsweg B und dem Sicherheitsabstand S zusammensetzt. Hierbei wird der Reaktionsweg R also nicht mehr berücksichtigt, da das nachfolgende weitere Fahrzeug 4 dem überholenden nachfolgenden weiteren Fahrzeug 3 mehrere Sekunden lang gefolgt ist. Dadurch hat ein Fahrer des nachfolgenden weiteren Fahrzeuges 4 ausreichend Zeit, um durch einen Bremsvorgang auf das überholende nachfolgende weitere Fahrzeug 3 zu reagieren. Die Reaktionszeit ist somit verstrichen und der Reaktionsweg R muss daher nicht mehr berücksichtigt werden.

Wenn, wie weiter oben beschrieben, von einem ungünstigsten Fall ausgegangen wird, bei welchem das nachfolgende weitere Fahrzeug 4 mit einer denkbaren Höchstgeschwindigkeit von 250 km/h fährt und die Reaktionszeit 1 s beträgt, so ist der Reaktionsweg R 70 m lang. Da der Reaktionsweg R in Bezug auf die zweite Verkehrssituation in der weiteren Abbildung A2 unberücksichtigt bleibt, beträgt der weitere Mindestfreiraum M2 70 m weniger als der Mindestfreiraum M1 gemäß der in Abbildung A1 gezeigten ersten Verkehrssituation.

In dem in der weiteren Abbildung A2 beschriebenen zweiten Verkehrssituation ist die Sensorreichweite W in Bezug auf den rückwärtigen Raum des Fahrzeuges 1 ausreichend groß, um den verkürzten weiteren Mindestfreiraum M2 zu erkennen.

Das Fahrzeug 1 kann somit gemäß der zweiten Verkehrssituation erkennen, ob hinter ihm ein für sein Überholmanöver ausreichend großer Freiraum vorhanden ist und kann dann das automatisierte Überholmanöver zulassen.

Gemäß der in der Abbildung A1 gezeigten ersten Verkehrssituation ist es dem Fahrzeug 1 aufgrund der begrenzten Sensorreichweite W technisch nicht möglich, Voraussetzungen für ein Zulassen des Überholmanövers zu überprüfen.

In der in der weiteren Abbildung A2 gezeigten zweiten Verkehrssituation ist es dem Fahrzeug 1 hingegen technisch möglich, die Voraussetzungen für ein Zulassen des geplanten Überholmanövers zu überprüfen.

Daher ist für das Fahrzeug 1 und seine Fahrstrategie sinnvoll, die erste Verkehrssituation in die zweite Verkehrssituation zu überführen. Hierzu kann zunächst überprüft werden, ob eine vorliegende Situation der ersten Verkehrssituation entspricht. Wenn dies der Fall ist, werden Maßnahmen eingeleitet, um die aktuelle Situation in die zweite Verkehrssituation zu überführen. Dazu verringert das Fahrzeug 1, insbesondere durch ein vergleichsweise leichtes Abbremsen, seine momentane Fahrgeschwindigkeit, um das nachfolgende weitere Fahrzeug 3 zu veranlassen, das Fahrzeug 1 und das vorausfahrende Fahrzeug 2 zu überholen.

Liegt die zweite Verkehrssituation vor, kann das Fahrzeug 1 dann überprüfen, ob ein ausreichender Freiraum zur Durchführung seines geplanten Überholmanövers vorhanden ist und gegebenenfalls das Überholmanöver durchführen.

## Patentansprüche

1. Verfahren zur Durchführung eines automatisierten Überholmanövers eines Fahrzeuges (1), wobei in einer Umgebung des Fahrzeuges (1) fahrende weitere Fahrzeuge (2 bis 4) erfasst werden,
**dadurch gekennzeichnet, dass**
- bei einem von dem Fahrzeug (1) geplanten Überholmanöver anhand erfasster Signale einer Umgebungssensorik überprüft wird, ob sich innerhalb einer rückwärtigen Sensorreichweite (W) der Umgebungssensorik auf einer Fahrspur (F1) des Fahrzeuges (1) und auf einer Überholspur (F2) nachfolgende weitere Fahrzeuge (3, 4) befinden,
- wenn anhand der erfassten Signale ermittelt wird, dass sich innerhalb der Sensorreichweite (W) nur auf der Fahrspur (F1) des Fahrzeuges (1) ein nachfolgendes weiteres Fahrzeug (3) befindet, eine momentane Fahrgeschwindigkeit des Fahrzeuges (1) um einen vorgegebenen Geschwindigkeitswert verringert wird, um das nachfolgende weitere Fahrzeug (3) zum Überholen des Fahrzeuges (1) und eines dem Fahrzeug (1) vorausfahrenden Fahrzeuges (2) zu veranlassen, und
- nachdem das nachfolgende weitere Fahrzeug (3) das Fahrzeug (1) überholt hat, anhand erfasster Signale der Umgebungssensorik überprüft wird, ob ein zur Durchführung des Überholmanövers erforderlicher Freiraum auf der Überholspur (F2) vorhanden ist.

2. Verfahren nach Anspruch 1,
**dadurch gekennzeichnet, dass** wenn auf der Überholspur (F2) ein nachfolgendes weiteres Fahrzeug (4) innerhalb der Sensorreichweite (W) erfasst wird, das Überholmanöver des Fahrzeuges (1) nicht eingeleitet wird, wenn ein Abstand zwischen dem auf der Überholspur (F2) fahrenden nachfolgenden weiteren Fahrzeug (4) und dem Fahrzeug (1) geringer ist als ein für einen zumutbaren Bremsvorgang des nachfolgenden weiteren Fahrzeuges (4) erforderlicher Mindestfreiraum (M1).

3. Verfahren nach Anspruch 2,
**dadurch gekennzeichnet, dass** der erforderliche Mindestfreiraum (M1) des auf der Überholspur (F2) fahrenden weiteren Fahrzeuges (4) aus einem Reaktionsweg (R), einem Bremsweg (B) und einem Sicherheitsabstand (S) nach einem durchgeführten Bremsvorgang des nachfolgenden weiteren Fahrzeuges (4) zu dem Fahrzeug (1) auf der Überholspur (F2) ermittelt wird.

4. Verfahren nach Anspruch 3,
**dadurch gekennzeichnet, dass**
- wenn das auf der Überholspur (F2) fahrende, nachfolgende weitere Fahrzeug (4) für eine vorgegebene Zeitdauer innerhalb der rückwärtigen Sensorreichweite (W) des Fahrzeuges (1) erfasst wird und
- auf der Überholspur (F2) erfasst wird, dass zwischen dem Fahrzeug (1) und dem weiteren Fahrzeug (3), welches das Fahrzeug (1) bereits überholt hat, ein vorgegebener weiterer Sicherheitsabstand (Sv) vorhanden ist sowie
- ein erforderlicher weiterer Mindestfreiraum (M2) für das nachfolgende weitere Fahrzeug (4) auf der Überholspur (F2) vorhanden ist,
das Fahrzeug (1) sein geplantes Überholmanöver einleitet.

5. Verfahren nach Anspruch 4,
**dadurch gekennzeichnet, dass** wenn das auf der Überholspur (F2) fahrende nachfolgende weitere Fahrzeug (4) für die vorgegebene Zeitdauer innerhalb der rückwärtigen Sensorreichweite (W) des Fahrzeuges (1) erfasst wird, der erforderliche weitere Mindestfreiraum (M2) für das nachfolgende weitere Fahrzeug (4) auf der Überholspur (F2) aus einem Bremsweg (B) und einem Sicherheitsabstand (S) ermittelt wird.

## Claims

1. Method for performing an automated overtaking maneuver of a vehicle (1), wherein further vehicles (2 to 4) driving in the surroundings of the vehicle (1) are detected,
**characterized in that**
- during an overtaking maneuver planned by the vehicle (1), it is checked based on signals detected by a surroundings sensor system whether within a rearward sensor range (W) of the surroundings sensor system there are following further vehicles (3, 4) in a driving lane (F1) of the vehicle (1) and in an overtaking lane (F2),
- if it is ascertained based on the detected signals that within the sensor range (W) there is only a following further vehicle (3) in the driving lane (F1) of vehicle (1), an instantaneous speed of vehicle (1) is reduced by a predetermined speed value in order to cause the following further vehicle (3) to overtake the vehicle (1) and a vehicle (2) driving ahead of the vehicle (1), and
- after the following further vehicle (3) has overtaken the vehicle (1), it is checked based on signals detected by the surroundings sensor system whether there is free space in the overtaking lane (F2) required to perform the overtaking maneuver.

2. Method according to claim 1,
**characterized in that** if within the sensor range (W) a following further vehicle (4) is detected in the overtaking lane (F2), the overtaking maneuver of the vehicle (1) is not initiated if a spacing between the following further vehicle (4) driving in the overtaking lane (F2) and the vehicle (1) is less than a minimum free space (M1) required for a reasonable braking procedure of the following further vehicle (4).

3. Method according to claim 2,
**characterized in that** the required minimum free space (M1) of the further vehicle (4) driving in the overtaking lane (F2) is ascertained from a reaction distance (R), a braking distance (B), and a safety distance (S) after a braking procedure performed by the following further vehicle (4) to the vehicle (1) in the overtaking lane (F2).

4. Method according to claim 3,
**characterized in that**
- if within the rearward sensor range (W) of the vehicle (1) the following further vehicle (4) driving in the overtaking lane (F2) is detected for a predefined time period and
- it is detected in the overtaking lane (F2) that there is a predefined further safety distance (Sv) between the vehicle (1) and the further vehicle (3) which has already overtaken the vehicle (1) and
- there is a required further minimum free space (M2) for the following further vehicle (4) in the overtaking lane (F2),
the vehicle (1) initiates its planned overtaking maneuver.

5. Method according to claim 4,
**characterized in that** if within the rearward sensor range (W) of the vehicle (1) the following further vehicle (4) driving in the overtaking lane (F2) is detected for the predefined time period, the required further minimum free space (M2) for the following further vehicle (4) in the overtaking lane (F2) is ascertained from a braking distance (B) and a safety distance (S).

## Revendications

1. Procédé permettant d'effectuer une manœuvre de dépassement automatisée d'un véhicule (1), dans lequel d'autres véhicules (2 à 4) circulant dans l'environnement du véhicule (1) sont détectés,
**caractérisé en ce que**
- lors d'une manœuvre de dépassement planifiée par le véhicule (1), on vérifie, à l'aide de signaux détectés d'un système de capteurs d'environnement, si, dans un champ de capteurs (W) arrière du système de capteurs d'environnement, d'autres véhicules suiveurs (3, 4) se trouvent sur une voie de circulation (F1) du véhicule (1) et sur une voie de dépassement (F2),
- lorsqu'il est déterminé, à partir des signaux détectés, que, dans le champ de capteurs (W), seul un autre véhicule suiveur (3) se trouve sur la voie de circulation (F1) du véhicule (1), la vitesse de conduite actuelle du véhicule (1) est réduite d'une valeur de vitesse prédéfinie afin de permettre à l'autre véhicule suiveur (3) de dépasser le véhicule (1) et un véhicule (2) circulant devant le véhicule (1), et
- une fois que l'autre véhicule suiveur (3) a dépassé le véhicule (1), on vérifie, à l'aide de signaux détectés du système de capteurs d'environnement, s'il existe sur la voie de dépassement (F2) un espace libre suffisant pour effectuer la manœuvre de dépassement.

2. Procédé selon la revendication 1,
**caractérisé en ce que**, lorsqu'un autre véhicule suiveur (4) est détecté sur la voie de dépassement (F2) dans le champ de capteurs (W), la manœuvre de dépassement du véhicule (1) n'est pas lancée si la distance entre l'autre véhicule suiveur (4) circulant sur la voie de dépassement (F2) et le véhicule (1) est inférieure à un espace libre minimal requis (M1) pour un processus de freinage acceptable de l'autre véhicule suiveur (4).

3. Procédé selon la revendication 2,
**caractérisé en ce que** l'espace libre minimal requis (M1) de l'autre véhicule (4) circulant sur la voie de dépassement (F2) est déterminé à partir d'une distance de réaction (R), d'une distance de freinage (B) et d'une distance de sécurité (S) après un processus de freinage effectué de l'autre véhicule suiveur (4) par rapport au véhicule (1) sur la voie de dépassement (F2).

4. Procédé selon la revendication 3,
**caractérisé en ce que**
- lorsque l'autre véhicule suiveur (4) circulant sur la voie de dépassement (F2) est détecté pendant une durée prédéfinie dans le champ de capteurs (W) arrière du véhicule (1) et
- qu'il est détecté sur la voie de dépassement (F2) qu'il existe, entre le véhicule (1) et l'autre véhicule (3) qui a déjà dépassé le véhicule (1), une autre distance de sécurité (Sv) prédéfinie, et
- qu'un autre espace libre minimal requis (M2) est présent pour l'autre véhicule suiveur (4) sur la voie de dépassement (F2),
le véhicule (1) lance sa manœuvre de dépassement planifiée.

5. Procédé selon la revendication 4,
**caractérisé en ce que**, lorsque l'autre véhicule suiveur (4) circulant sur la voie de dépassement (F2) est détecté pendant la durée prédéfinie dans le champ de capteurs (W) arrière du véhicule (1), l'autre espace libre minimal requis (M2) pour l'autre véhicule suiveur (4) sur la voie de dépassement (F2) est déterminé à partir d'une distance de freinage (B) et d'une distance de sécurité (S).
